# EUROPEAN PATENT APPLICATION

(11) **EP 2 099 218 A1**
(43) Date of publication of application: **09.09.2009**
(21) Application number: 06834246.8
(22) Date of filing: 07.12.2006
(51) Int. Cl.: H04N 5/76, H04N 5/765, H04N 7/173

(54) **DIGITAL BROADCAST RECEIVING APPARATUS, DIGITAL BROADCAST RECORDING METHOD AND DIGITAL BROADCAST REPRODUCING METHOD**

(71) Applicant: Panasonic Corporation, Kadoma-shi Osaka 571-8501 (JP)
(72) Inventor: SUEYOSHI, Hiroki, Osaka-shi, Osaka 540-6207 (JP)
(74) Representative: Grünecker, Kinkeldey, Stockmair & Schwanhäusser Anwaltssozietät
(86) International application number: PCT/JP2006/324491
(87) International publication number: WO 2008/068870

(57) **Abstract**

A digital broadcast receiving apparatus wherein even if a digital broadcast is received and recorded under a bad reception environment, good reproduction and display of the digital broadcast can be achieved with no feeling of unsatisfaction or unpleasantness occurring to the user. In this apparatus, an OFDM demodulating part (3) performs OFDM demodulation and error correction of one-segment broadcast signals to determine whether the reception thereof is normal or abnormal, and then adds TEI in accordance with a determination result to a TS packet. An analyzing part (11) analyzes the TEI to determine whether the recording of the broadcast program is normal or abnormal. A recording apparatus (12) records the TS packet. A main display part (7) displays an image and further displays whether the recording of the broadcast program is normal or abnormal.

## Description

### Technical Field

The present invention relates to a digital broadcast receiving apparatus, digital broadcast recording method, and digital broadcast playback method.

### Background Art

In Japan, a transition from analog broadcasting to digital broadcasting is advancing, with terrestrial digital television broadcasting (hereinafter "terrestrial digital broadcasting") starting gradually.

Nowadays terrestrial digital broadcasting employs a segmented OFDM (Orthogonal Frequency Division Multiplex) modulation scheme called "ISDB-T" (Integrated Services Digital Broadcasting-Terrestrial). In ISDB-T, 13 segments in a channel can be divided into three layers maximum, so that different transmission parameters can be assigned to each layer. This will be referred to as "layered transmission" hereinafter. To be more specific, in the terrestrial digital broadcasting system of Japan, one channel is divided into 13 "segments," and they are bundled together to transmit images, data and sound.

By use of layered transmission, terrestrial digital broadcasting can provide a plurality of services on a single channel. Terrestrial digital broadcasting, which started on April 1, 2006, provide broadcasting not only for conventional stationary receiving apparatuses, and can be received with mobile receivers such as mobile terminals and in-vehicle receivers (see Patent Document 1, for example). The broadcasting provided by terrestrial digital broadcasting for mobile equipment such as mobile phones used to be called by a technical name of "one-segment broadcasting," but the name "one-seg" was adopted by the Association for Promotion of Digital Broadcasting in September, 2005. Hereinafter, terrestrial digital broadcasting for mobile terminals will be referred to as "one-seg."

A variety of methods have been proposed to realize one-seg. For example, in the terrestrial digital broadcasting described in Patent Document 1, high-quality image recording and playback are accomplished by providing a means for acquiring predictive image data by performing predictive coding on received signals received by a broadcast receiving terminal in the time domain and by combining the predictive-encoded image data with image data obtained directly from the received signals for recording or playback. Also, one-seg assumes reception by moving mobile terminals and therefore uses a modulation scheme that is more robust to errors than by stationary receivers, such as the QPSK modulation scheme.

Patent Document 1: Japanese Patent Application Laid-Open Publication No. 2005-277996

### Disclosure of Invention

### Problems to be Solved by the Invention

However, even when a predictive coding means is provided for a sophisticated image processing or an error-robust modulation scheme is used, the receivers to receive one-seg are mobile receivers such as mobile phones and in-vehicle receivers, and so reception is not always done in a stable receiving environment. Furthermore, following the user's move, a one-seg receiver may on occasion move from a location where radio waves can be received, to another location where radio waves cannot be received at all. Thus, there are naturally limits to achieving good one-segment reception quality, and there are cases where recording quality drops temporarily. As a result, the user may feel dissatisfaction or displeasure. For example, while a broadcast program is being recorded by a receiver, the user may be watching a program other than the program that is being recorded or may be using another application such as e-mail or the Internet. In such cases, if the reception condition of the broadcast program being recorded deteriorates, the user may not even notice this. As a result, the user realizes the poor recording quality only upon playing the recorded broadcast program. This creates the problem of making the user feel dissatisfaction or displeasure.

It is therefore an object of the present invention to provide a digital broadcast receiving apparatus, digital broadcast recording method, and digital broadcast playback method that can realize excellent digital broadcast playback and display without making the user feel dissatisfaction or displeasure even when digital broadcasting is received and recorded in a poor receiving environment.

### Means for Solving the Problem

The digital broadcast receiving apparatus of the present invention employs a configuration including: a receiving section that receives digital broadcast signals; a demodulating section that demodulates the received digital broadcast signals and extracts packet data; a recording section that records the packet data extracted in the demodulating section; an analyzing section that analyzes a reception condition of the packet data recorded in the recording section; and a reporting section that reports a recording condition of the packet data recorded in the recording section based on the analysis in the analyzing section.

The digital broadcast recording method of the present invention includes: a receiving step of receiving digital broadcast signals; a demodulating step of demodulating the received digital broadcast signals and extracting packet data; a recording step of recording the packet data extracted in the demodulating step; an analyzing step of analyzing a reception condition of the packet data recorded in the recording step; and a reporting step of reporting a recording condition of the packet data recorded in the recording step based on the analysis in the analyzing step.

The digital broadcast playback method of the present invention includes: a receiving step of receiving digital broadcast signals; a demodulating step of demodulating the received digital broadcast signals and extracting packet data; a recording step of recording the packet data extracted in the demodulating step; an analyzing step of analyzing a reception condition of the packet data recorded in the recording step; a recording condition determining step of determining a recording condition of the packet data recorded in the recording step based on the analysis in the analyzing step; and a playback control step of displaying an image of a playback and the recording condition together when the packet data recorded in the recording step is played.

### Advantageous Effect of the Invention

The present invention provides an advantage of realizing excellent digital broadcast recording and playback without making the user feel dissatisfaction or displeasure regardless of the receiving conditions.

### Brief Description of Drawings

FIG.1 is a block diagram showing a configuration of a one-seg receiving apparatus according to an embodiment of the present invention;
FIG.2 is a flowchart showing recording process operations of a one-seg receiving apparatus according to an embodiment of the present invention;
FIG.3 shows detection results of recording condition of a one-seg receiving apparatus according to an embodiment of the present invention;
FIG.4 illustrates bad reception during recording of a broadcast program by a one-seg receiving apparatus according to an embodiment of the present invention;
FIG.5 is a flowchart showing playback process operations of a broadcast program by a one-seg receiving apparatus according to an embodiment of the present invention;
FIG.6 illustrates an example of display upon a playback when the record of a broadcast program is good, by a one-seg receiving apparatus according to an embodiment of the present invention;
FIG.7 illustrates an example of display upon a playback when the record of a broadcast program is bad, by a one-seg receiving apparatus according to an embodiment of the present invention; and
FIG.8 illustrates an example of display upon a playback when the record of a broadcast program is a failure, by a one-seg receiving apparatus according to an embodiment of the present invention.

### Best Mode for Carrying Out the Invention

Hereinafter, embodiments of the present invention will be explained in detail with reference to the accompanying drawings.

### (Embodiment)

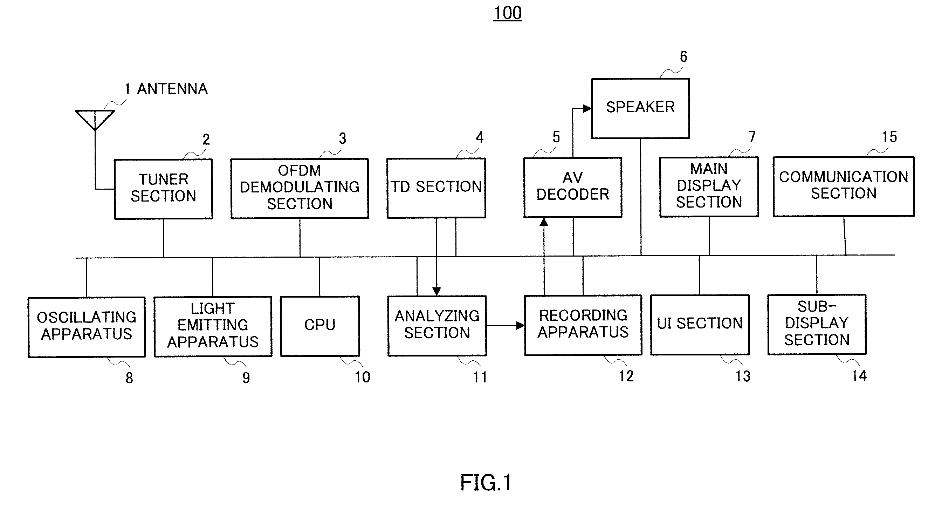

FIG.1 is a block diagram showing a configuration of one-seg receiving apparatus 100 according to an embodiment of the present invention.

In FIG.1, one-seg receiving apparatus 100 is comprised mainly of antenna 1, tuner section 2, OFDM demodulating section 3, transport decoder section 4 (hereinafter "TD section 4"), AV decoder 5, speaker 6, main display section 7, oscillating apparatus 8, light emitting apparatus 9, CPU 10, analyzing section 11, recording apparatus 12, user interface section 13 (hereinafter "UI section 13"), sub-display section 14, and communication section 15.

Antenna 1 receives one-seg radio waves of channel 1 to channel 63 of the UHF band having been OFDM-modulated and transmitted by a digital broadcast transmitting apparatus (not shown), and outputs the received signals to tuner section 2.

Tuner section 2 selects the received signal of the channel frequency specified by CPU 10, from the received signals received by antenna 1, and outputs this signal as the one-seg broadcast signal set up by the user, to OFDM demodulating section 3.

OFDM demodulating section 3 performs an OFDM demodulation and error correction on the one-seg broadcasting signal outputted from tuner section 2, extracts packets that each have a fixed length of 188 bytes and that are called "MPEG2-TS" (Moving Picture Experts Group Phase 2 - Transport Stream, hereinafter simply "TS"), and outputs the packets to TD section 4. Also, based on the error correction result, OFDM demodulating section 3 determines whether the reception has been good or bad for each packet of the demodulated TS. To be more specific, OFDM demodulating section 3 determines that the reception has been good when the error correction succeeds and determines that the reception has been bad when the error correction fails. Also, OFDM demodulating section 3 writes "0" in the TEI (Transport Error Indicator) provided in the header of a TS packet that is determined to have been received successfully and writes "1" in the TEI provided in the header of a TS packet that is determined to have been received unsuccessfully. Then OFDM demodulating section 3 outputs the TS with additions of TEIs, to TD section 4.

When the user watches a broadcast program, TD section 4 outputs the TS packets inputted from OFDM demodulating section 3 to AV decoder 5 sequentially according to the PIDs (Packet IDentifiers) specified by CPU 10. Also, when a broadcast program is recorded, TD section 4 outputs the TS packets inputted from OFDM demodulating section 3 sequentially to analyzing section 11 according to the PIDs (Packet IDentifiers) specified by CPU 10.

When the user watches a broadcast program, AV decoder 5 extracts the audio and video PESs (Packetized Elementary Streams) or ESs (Elementary Streams) from the TS packets outputted fromTD section 4, decodes the streams, and outputs the resulting audio signal and video signal to speaker 6 and main display section 7.

Also, when a recorded broadcast program is played, AV decoder 5 reads out TS packets recorded in recording apparatus 12, extracts the audio and video PESs (Packetized Elementary Streams) or ESs (Elementary Streams) from the read TS packets, decodes the streams, and outputs the resulting audio signal and video signal to speaker 6 and main display section 7.

Speaker 6 plays sound according to the audio signal outputted from AV decoder 5.

Main display section 7 plays images according to the video signal outputted from AV decoder 5. Also, main display section 7 displays the recording condition as to whether or not the record is good or bad, recorded in recording apparatus 12, with images. Note that main display section 7, having a wide display field, is capable of OSD (On Screen Display) for displaying character information outputted by CPU 10 for the convenience of the user. Also, main display section 7 may display images and the recording condition separately.

Oscillating apparatus 8 oscillates at a command to oscillate from CPU 10, in order to inform the user that the reception condition of one-seg receiving apparatus 100 is bad or that the record is bad or a failure.

Similar to oscillating apparatus 8, light emitting apparatus 9 emits light at a command to emit light from CPU 10, in order to inform the user of the condition of one-seg receiving apparatus 100. For example, light emitting apparatus 9 emits blue light when recording has been successful and emits red light when the record is bad or is a failure.

CPU 10 controls the entirety of one-seg receiving apparatus 100. To be more specific, CPU 10 performs a control for recording a broadcast program selected by the user in recording apparatus 12 by controlling tuner section 2, OFDM demodulating section 3 and TD section 4. Further, for example, when a defect occurs during recording in recording apparatus 12, CPU 10 performs a control for showing information to that effect on main display section 7 by OSD (On Screen Display). Also, if a defect occurs when one-seg receiving apparatus 100 is a foldable apparatus and the user cannot see main display section 7 because one-seg receiving apparatus 100 is in a folded state, CPU 10 performs a control for displaying the defect, for example, on sub-display section 14, which the user can see even when one-seg receiving apparatus 100 is in a folded state. Also, CPU 10 gives a command to oscillate to oscillating apparatus 8 or a command to emit light to light emitting apparatus 9, based on the detection result in analyzing section 11 (described later).

Analyzing section 11 outputs the TS packets inputted from TD section 4 to recording apparatus 12 in order to record a broadcast program. To be more specific, analyzing section 11 analyzes the TEI in the header of each TS packet inputted from TD section 4, detects for each packet whether the record of the broadcast program is good or bad, and outputs the detection results to recording apparatus 12.

Recording apparatus 12 records the broadcast program by storing the TS packets and the detection results of the packets inputted from analyzing section 11 in a predetermined format. Also, at a command to control the playback of the broadcast program from CPU 10, recording apparatus 12 outputs the stored TS packets to AV decoder 5.

UI section 13, which includes buttons and so on for inputting and operation by the user, so that, by operating the buttons and so on, the user outputs to CPU 10, for example, channel selection information corresponding to the broadcast program to be recorded, information about recording start and stop, playback start and stop and so on.

Communication section 15 communicates with the base station if one-seg receiving apparatus 100 is amobile phone apparatus.

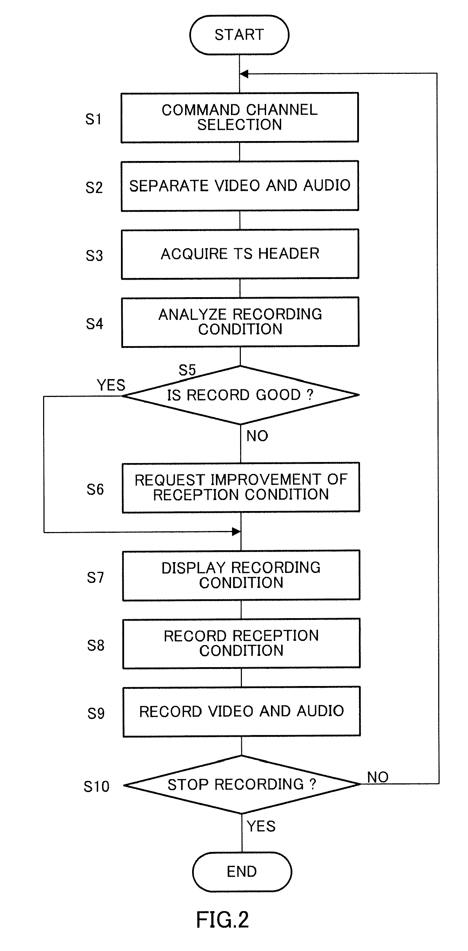

FIG. 2 is a flowchart showing the broadcast program recording process operations by one-seg receiving apparatus 100. Hereinafter, the recording process operations to record a broadcast program by one-seg receiving apparatus 100 will be explained with reference to FIG.2. Assume that antenna 1 is receiving one-seg broadcasting radio waves and the user is operating UI section 13 to output a signal to receive a specific channel to CPU 10.

When a broadcast program starts being recorded, CPU 10 acquires channel selection information about the broadcast program specified by UI section 13, and commands tuner section 2 and OFDM demodulating section 3 to select the channel (step S1). Thereupon, tuner section 2 outputs the broadcast signal of the selected channel, out of broadcast signals received by antenna 1, to OFDM demodulating section 3. OFDM demodulating section 3 performs an OFDM demodulation on the inputted broadcast signals and outputs the demodulated data signals (i.e. TS packets containing TEIs in the headers) to TD section 4.

Next, CPU 10 specifies the PIDs for the broadcast program to be recorded in TD section 4. TD section 4 outputs the video and audio TS packets specified by the PIDs, to analyzing section 11 (step S2).

Analyzing section 11 acquires the TEIs by extracting the TS headers from the inputted TS packets (step S3). Analyzing section 11 analyzes the acquired TEIs (step S4), detects the reception conditions such as whether the broadcast program to be recorded has been received successfully, outputs the detection results to CPU 10, and at the same time records the detection results in a predetermined format in recording apparatus 12. CPU 10 determines the recording condition (step S5). To be more specific, when the TEI is 1, CPU 10 determines that the record is bad and shifts to step S6 where improvement of the reception condition is requested, and, when the TEI is 0, CPU 10 determines that the record is good and shifts to step S7. Also, when no TS packets are outputted and therefore TEIs cannot be extracted, CPU 10 determines in step S5 that the record is a failure and shifts the control to step S6.

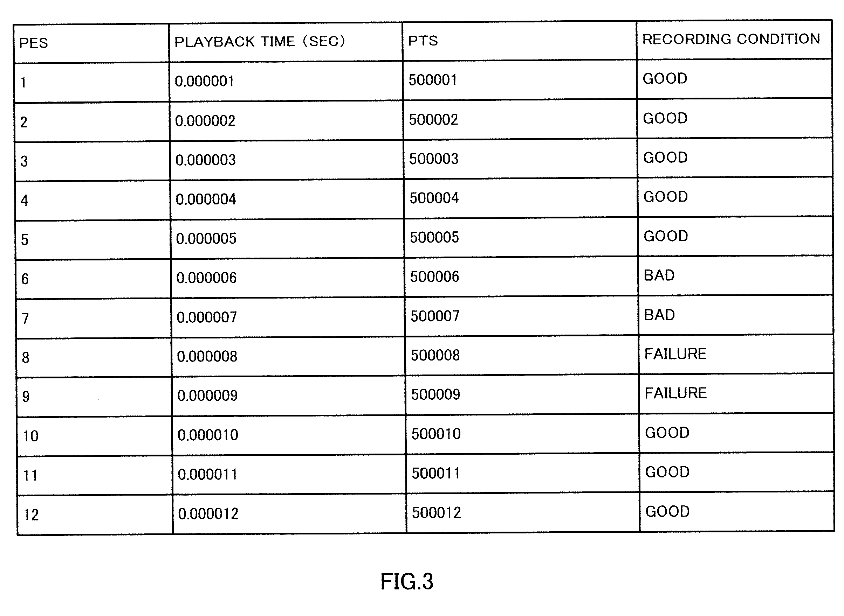

Now, the storing of the results of the detection performed in analyzing section 11 in step S5 will be explained. FIG.3 shows a format for detection results to be stored in recording apparatus 12. As shown in FIG. 3, detection results are recorded in the order of occurrence of PES packets. That is, in FIG.3, PTS (Presentation Time Stamp) shows the time of display. PTS is usually counted at 27 MHz in an actual system, but is counted at 1 MHz in FIG.3 for ease of explanation, schematically showing a case where PES is counted and a PES packet is sent out every 1/1000000 second. PES packet is comprised of a plurality of TS packets. When the TEI is 1 in at least one TS packet in video and audio TS packets, analyzing section 11 determines that the recording condition of the pertaining PES packets is "bad" and records this in recording apparatus 12, such as shown with PES 6 (playback time: 0.000006) and PES 7 (playback time: 0.000007) in FIG.3. Also, if all the TEIs of the TS packets constituting PES packets cannot be analyzed, analyzing section 11 determines that the recording condition of the pertaining PES packets is "failure" and records this in recording apparatus 12, such as shown with PES 8 (playback time: 0.000008) and PES 9 (playback time: 0.000009) in FIG.3. As for a PES in which the TEI is 0 in all TS packets, analyzing section 11 records "good" for the recording condition in recording apparatus 12 as shown in FIG.3 (step S8).

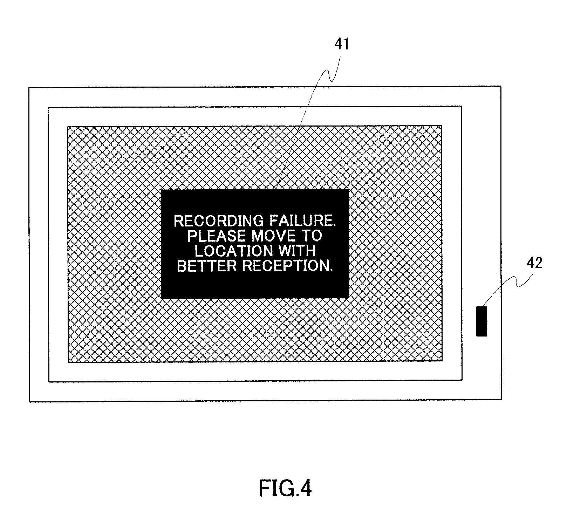

When it is determined in step S5 that the record is bad or a failure ("No" in step S5), CPU 10, by controlling main display section 7 to produce an OSD display in the central part thereof of character information such as "Recording failure. Please move to location with better reception," as indicated by reference numeral 41 in FIG. 4, informs the user that the reception condition of radio waves is poor and advises the user to improve the reception condition (step S6). Note that, in step S6, if main display section 7 is a foldable mobile phone or equivalent and cannot be used because one-seg receiving apparatus 100 is in a folded state, CPU 10 displays a record defect on sub-display section 14.

Next, CPU 10 causes light emitting apparatus 9 to display the recording condition based on the result of the detection in analyzing section 11, as indicated by reference numeral 42 in FIG.4 (step S7). For example, light emitting apparatus 9 emits blue light when the recording has been successful and emits red light when the record is bad or a failure. Further, when the record is bad or a failure, oscillating apparatus 8 is made to oscillate and the user that the record is bad.

Thus, the detection results are stored automatically as described above because it is not always the case that the user is watching the broadcast program that is being recorded. For example, it may be possible that the user is watching a broadcast program other than the program that is being recorded or using other applications such as e-mail and browser. In such a case, it is desirable to report the recording condition of the broadcast program to the user by other means than main display section 7.

As described above, the video and audio TS packets and the detection results are recorded in recording apparatus 12 through analyzing section 11 (step S9).

Then one-seg receiving apparatus 100 finishes the recording process when the limit of recording capacity is reached during recording in recording apparatus 12 or when there is a request to stop the recording from the user ("Yes" in step S10), or, otherwise ("No" in step S10), shifts to step S1 and continue recording the broadcast program.

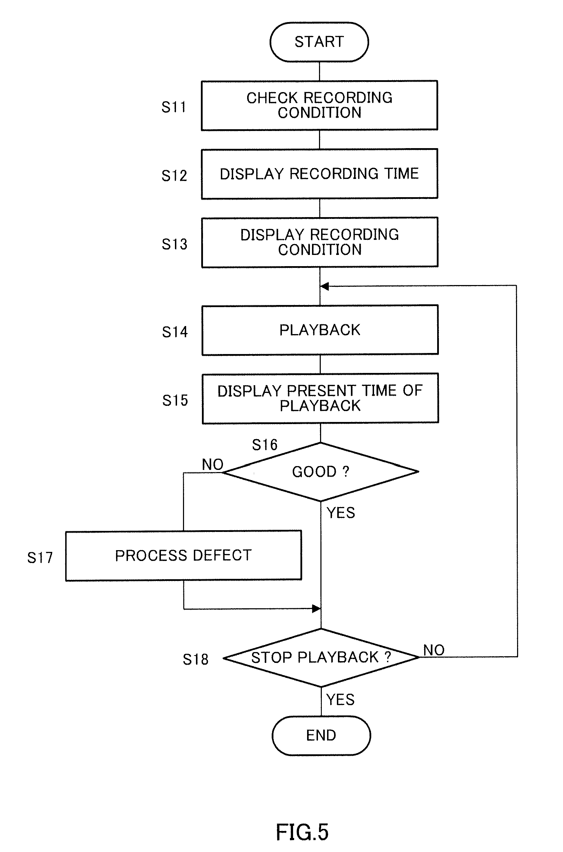

Now, the playback process operations to play a broadcast program recorded in one-seg receiving apparatus 100 will be explained. FIG.5 is a flowchart showing playback process operations to play a broadcast program recorded in recording apparatus 12 of one-seg receiving apparatus 100 using a sequence of video and audio TS packets.

When a playback is started, CPU 10 checks the contents and the recording condition of the broadcast program recorded in recording apparatus 12 (step S11).

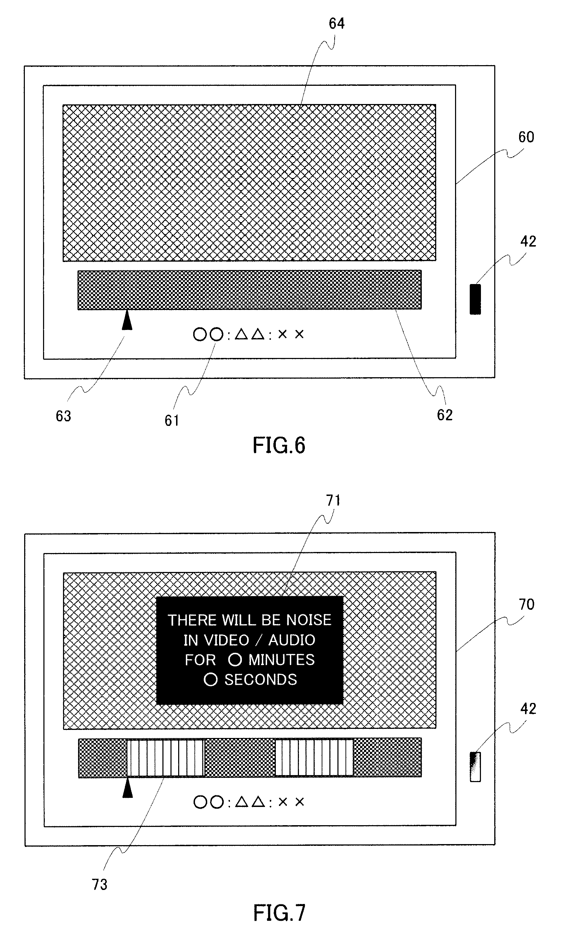

Then the broadcast program, reception condition, and other information concerning the playback are displayed on main display section 7. Hereinafter, the modes of display on main display section 7 will be explained with reference to FIG.6. In FIG.6, reference numeral 60 designates main display section 7.

On completion of a checking process in step S11, CPU 10 produces a display of the recording time of the broadcast program to be played down to units of seconds like "○○ hours □□ minutes ×× seconds," as indicated by reference numeral 61 in FIG.6.

Then CPU 10 causes main display section 7 to display the recording condition. To be more specific, when the recording condition shows no defect, the horizontal bar designated by reference numeral 62 in FIG. 6, is displayed to indicate that the record is good. Note that the symbol of an arrow designated by reference numeral 63 in FIG. 6 moves from left to right following the progress of the playback, thereby indicating places in the broadcast program being that are playing, in association with the bar display 62.

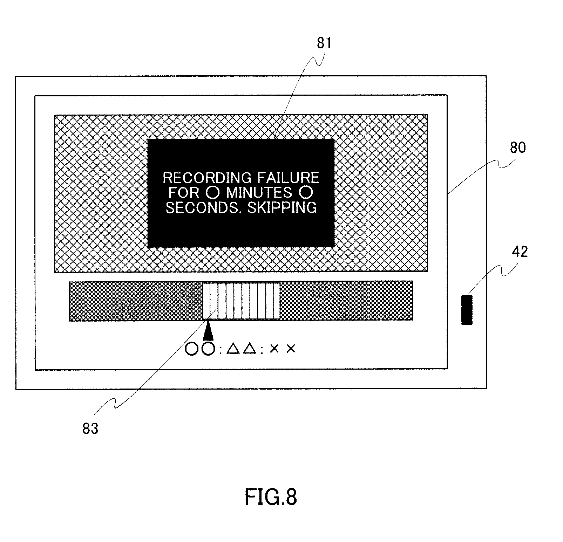

Also, when the recording condition confirms the presence of a defect, CPU 10 causes main display section 7 to display the occurrence of the defect. The display of a defect in this case will be explained with reference to FIG.7. Reference numeral 70 in FIG.7 designates main display section 7. As indicated by reference numeral 71 in FIG.7, CPU 10 expressly displays by OSD the occurrence of a defect by a statement like "There will be noise in video/audio for ○ minutes ○ seconds" in the central part of main display section 70 where the user can easily notice the presence of defective parts in the record. Similarly, when the record is a failure, CPU 10 provides an OSD display of the presence of a place where the recording has failed, by a statement like "Recording failure for ○ minutes ○ seconds. Skipping." as indicated by reference numeral 81 in FIG.8 (step S13). Note that reference numeral 80 in FIG.8 designates main display section 7.

Afterwards, CPU 10 controls recording apparatus 12 to start a playback of the contents recorded (step S14). The video signal that is played is displayed as images on main display section 7 by AV decoder 5. The images are displayed in the central part of main display section 7, indicated by reference numeral 64 in FIG.6. Also, when images are played normally, CPU 10 controls main display section 7 (reference numeral 60 in FIG.6) to indicate the place in the time domain that is currently playing by the arrow symbol designated by reference numeral 63 in FIG. 6, and furthermore display what position in the time domain the time currently playing corresponds to, to the units of seconds, such as "○○ hours □□ minutes ×× seconds," in the position designated by reference numeral 61 in FIG.6 (step S15).

Next, CPU 10 learns the recording condition by referencing the recorded contents shown in FIG.3, read out from recording apparatus 12. CPU 10 shifts to step S17 to perform a relevant defect processing (described later) if the recording condition is bad, and shifts to step S18 to determine whether to stop the playback if the recording condition is good (step S16). Therefore, unless the user stops the playback by operating UI section 13, one-seg receiving apparatus 100 will continue the playback process.

If the recording condition is bad in step S16 ("No" in step S16), CPU 10 moves the control to step S16 and controls main display section 7 to display a statement like "There will be noise in video/audio for ○ minutes ○ seconds, " as indicated by reference numeral 71 in FIG.7 in the central part of main display section 70 (reference numeral 70 in FIG.7) (step S17). Note that, in step S17, CPU 10 calculates the duration of the part where the record is bad, using, for example, the time from the timing of the PES packet in which the recording condition becomes bad to the timing of the PES packet in which the recording condition becomes good (i.e. the time from PES 6 to PES 9 in FIG.3), as shown schematically in FIG. 3. Following this calculation of the duration the record is bad, CPU 10 produces a display to show expressly which part in the time domain is bad, as indicated by reference numeral 73 in FIG.7. Note that display 73 indicating bad reception may sometimes occur in a plurality of places.

Further, CPU 10 controls main display section 7 to display a statement like "Skip to good record?" as shown in the central part 81 of main display section 70 in FIG.8 (reference numeral 80 in FIG.8). If the user decides to skip in response to this display and causes UI section 13 to send an output to that effect, CPU 10 controls the playback operation in recording apparatus 12. To be more specific, in response to the above output, recording apparatus 12 starts a playback from the place where the record is good, following the control from CPU 10 (step S17). In FIG.8, reference numeral 83 indicates the part to skip, where the recording has not been done successfully.

Next, when the last PES packet that is recorded is played or when there is a command to stop the playback from UI section 13 ("Yes" in step S18), CPU 10 controls recording apparatus 12 such that recording apparatus 12 stops the playback following the control by CPU 10. Otherwise ("No" in step S18), CPU 10 shifts the control to step S14 and controls recording apparatus 12 such that recording apparatus 12 continues the playback following the control from CPU 10 (step S18).

Thus, when a broadcast program is played from recording apparatus 12, the TS packets read out from recording apparatus 12 are outputted to AV decoder 5, and, in the same way as in the reception of one-seg broadcasting, the sound of the one-seg broadcast program is played from speaker 6 and images are displayed on main display section 7.

Note that a configuration may be adopted whereby oscillating apparatus 8 and light emitting apparatus 9 do not start during a playback of a broadcast program. This is because the user is watching the program and alarm is not necessary. However, if the user operates UI section 13 and sets up an alarm, CPU 10 may detect this setup and start oscillating apparatus 8 and light emitting apparatus 9 when a defect occurs. In other words, oscillating apparatus 8 and light emitting apparatus 9, in combination with the OSD function, can reliably communicate the state of bad reception and 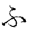 failure in received record to the user even when the user is recording a broadcast program as a "counterprogram" while watching another program. This improves the usefulness of the one-seg receiving apparatus and provides a great practical advantage.

Although, with the above-described embodiments of the present invention, TS packets to be recorded in recording apparatus 12 are inputted by receiving one-seg radio waves, this is by no means limiting, and it is equally possible to record TS packets of, for example, video information acquired through communication section 15 from a communication network for mobile phones.

Also, although, with the above-described embodiments of the present invention, TS packets have been explained to be separated between sound and image, it is equally possible to separate TS packets between sound, images and various other control signals. These packets for sound, images, and various controls may be separated in TD section 4 and recorded in recording apparatus 12 through analyzing section 11. Since these separation and control of TS packets acquired through demodulation in OFDM demodulating section 3 is well-known to those skilled in the art in the field of digital broadcasting, a detailed explanation thereof is omitted herein.

Note that, although the present invention provides a practical advantage with portable or mobile one-seg receiving apparatuses, the present invention is also applicable to digital broadcast receiving apparatuses for stationary one-seg reception. Also, the present invention is by no means limited to application for digital broadcasting using one segment and is equally applicable to digital broadcast receiving apparatuses for receiving digital broadcasting using a number of segments.

As described above, the one-seg receiving apparatus according to the embodiments of the present invention can inform the user of the reception condition in a clear way both during reception and during a playback, even when the condition of radio waves for one-seg reception becomes poor under certain inevitable circumstances. Thus, the user can recognize a poor recording condition in advance and use the one-seg receiving apparatus well by minimizing unwanted dissatisfaction or displeasure.

### [Industrial Applicability]

The present invention is applicable for use to a digital broadcast receiving apparatus, digital broadcast recording method, and digital broadcast playback method.

## Claims

1. A digital broadcast receiving apparatus comprising:
a receiving section that receives digital broadcast signals;
a demodulating section that demodulates the received digital broadcast signals and extracts packet data;
a recording section that records the packet data extracted in the demodulating section;
an analyzing section that analyzes a reception condition of the packet data recorded in the recording section; and
a reporting section that reports a recording condition of the packet data recorded in the recording section based on the analysis in the analyzing section.

2. The digital broadcast receiving apparatus according to claim 1, wherein:
the demodulating section extracts the packet data by performing an error correction of the digital broadcast signals in addition to the demodulation; and
the reporting section reports a defect in the recording condition when the analyzing section detects, by the analysis, a failure of the error correction in the demodulating section.

3. The digital broadcast receiving apparatus according to claim 1, wherein the reporting section is an oscillating section that reports a defect in the recording condition.

4. The digital broadcast receiving apparatus according to claim 1, wherein the reporting section is a light emitting section that reporting a defect in the recording condition.

5. The digital broadcast receiving apparatus according to claim 1, wherein the reporting section makes a report for encouraging improvement of the reception condition when the recording condition is bad.

6. The digital broadcast receiving apparatus according to claim 1, further comprising a playback control section that, when the packet data recorded in the recording section is played, displays an image of a playback and the recording condition together.

7. The digital broadcast receiving apparatus according to claim 6, wherein the playback control section performs playback by skipping a part of record in which the recording condition is bad.

8. A digital broadcast recording method comprising:
a receiving step of receiving digital broadcast signals;
a demodulating step of demodulating the received digital broadcast signals and extracting packet data;
a recording step of recording the packet data extracted in the demodulating step;
an analyzing step of analyzing a reception condition of the packet data recorded in the recording step; and
a reporting step of reporting a recording condition of the packet data recorded in the recording step based on the analysis in the analyzing step.

9. A digital broadcast playback method comprising:
a receiving step of receiving digital broadcast signals;
a demodulating step of demodulating the received digital broadcast signals and extracting packet data;
a recording step of recording the packet data extracted in the demodulating step;
an analyzing step of analyzing a reception condition of the packet data recorded in the recording step;
a recording condition determining step of determining a recording condition of the packet data recorded in the recording step based on the analysis in the analyzing step; and
a playback control step of displaying an image of a playback and the recording condition together when the packet data recorded in the recording step is played.

## Amended claims

### Amended claims under Art. 19.1 PCT

**1.** Deleted)

**2.** Deleted)

**3.** Deleted)

**4.** Deleted)

**5.** Deleted)

**6.** Deleted)

**7.** Deleted)

**8.** Deleted)

**9.** Deleted)

**10.** Added) A digital broadcast receiving apparatus comprising:
a receiving section that receives digital broadcast signals;
a demodulating section that demodulates the received digital broadcast signals and extracts packet data;
a detecting section that detects a defect in the packet data based on information indicating whether the reception is a success or failure, the information being contained in the packet data and extracted in the demodulating section;
a recording section that records the packet data extracted in the demodulating section; and
a reporting section that reports a recording condition of the packet data recorded in the recording section based on a result of the detection in the detecting section.

**11.** Added) The digital broadcast receiving apparatus according to claim 10, wherein the recording section records the recording condition together with the packet data irrespective of the result of the detection in the detecting section.

**12.** Added) The digital broadcast receiving apparatus according to claim 10, wherein the reporting section is an oscillating section that reports a defect in the recording condition.

**13.** Added) The digital broadcast receiving apparatus according to claim 10, wherein the reporting section is a light emitting section that reports a defect in the recording condition.

**14.** Added) The digital broadcast receiving apparatus according to claim 10, wherein the reporting section makes a report for encouraging improvement of the reception condition when the recording condition is bad.

**15.** Added) The digital broadcast receiving apparatus according to claim 10, further comprising a playback control section that, when the packet data recorded in the recording section is played, displays an image of a playback and the recording condition together.

**16.** Added) The digital broadcast receiving apparatus according to claim 15, wherein the playback control section performs the playback by skipping a part of record where the recording condition is bad.

**17.** Added) A digital broadcast playback method comprising:
a receiving step of receiving digital broadcast signals;
a demodulating step of demodulating the received digital broadcast signals and extracting packet data;
a detecting step of detecting a defect in the packet data based on a defect in the packet data based on information indicating whether the reception is a success or failure, contained in the packet data and extracted in the demodulating step;
a recording step of recording the packet data extracted in the demodulating step;
a recording condition determining step of determining a recording condition of the packet data recorded in the recording step based on a result of the detection in the detecting step; and
a playback control step of displaying an image of a playback and the recording condition together when the packet data recorded in the recording step is played.
